# EUROPEAN PATENT SPECIFICATION

(11) **EP 2 364 924 B1**
(45) Date of publication and mention of the grant of the patent: **11.05.2016**
(21) Application number: 11001805.8
(22) Date of filing: 04.03.2011
(51) Int. Cl.: B65D 43/16

(54) **Plastic container, in particular for catering purposes**
Kunststoffbehälter, insbesondere für Catering-Zwecke
Récipient en plastique, en particulier pour les besoins de restauration

(30) Priority: 08.03.2010 DE 202010003331 U
(43) Date of publication of application: 14.09.2011
(73) Proprietor: People on the Move B.V., 5657 EB Eindhoven (NL)
(72) Inventor: Wouters, Luc, 2250 Olen (BE)
(74) Representative: Wagner, Carsten

(56) References cited:
- AT-U1- 8 060

## Description

The invention relates to a plastics container as defined in the preamble of claim 1, in particular for catering purposes onboard aircrafts.

Corresponding plastics container are well-known and are used in particular for catering purposes onboard aircrafts.

EP 1 151 933 discloses a plastics container as defined in the preamble of claim 1, including a base and a lid, wherein said lid is connected with said base by a hinge-like element. The lid is movable between a closed position, in which the lid is hinged onto the base, and an open position. In the closed position, the lid and the base constitute a closed container for receiving food, cutlery and further catering utensils. For consuming food received in the container, the lid is hinged to the open position.

AT 008 060 U1 discloses a plastics container including a lower part and an upper part, that upper part being connected with the lower part by means of a hinge and said upper part being pivotable relative to the lower part between a closed position, in which the upper part is hinged onto the lower part, and an open position, wherein abutment means are provided for limiting the pivoting of the upper part relative to the lower part such that in the open position of the container the bottom surface of the lower part and the upper surface of the upper part are substantially aligned with each other.
It's an object of the invention to provide a plastics container as defined in the preamble of claim 1, which may be manufactured easily.

The known plastics containers are used such that, in particular for catering purposes onboard aircrafts, the container is served to a passenger who hinges the lid to the open position and consumes food received in the container. After the lid has been hinged to the open position, the container is space-consuming. This is a drawback in particular onboard aircrafts where the space is very limited. Furthermore, with the known container it is possible to separate the lid from the base by perforating the hinge, such that the base may be stacked into the lid.

In contrary thereto, the invention proposes a plastics container, the functionality of which is enhanced insofar as in the open position the container may be used as a tray. In the closed position the container may receive food, cutlery and further catering utensils. In said closed position, the container may be stored in a trolley in a space-saving manner. If necessary, a cardboard box or the like may be used in order to improve the stackability. For serving the food, the lid is hinged into the open position by pivoting the lid (upper part) relative to the base (lower part) into the open position. According to the invention abutment means are provided. Said abutment means are limiting the pivoting movement of the upper part relative to the lower part such that in the open position the bottom surface of the lower part is substantially aligned with the upper surface of the upper part. In particular, the pivoting of the upper part relative to the lower part between the open position and the closed position may be restricted to a pivoting angle of about 180°. The invention provides a plastics container which in the open position may be used as a tray by placing food and other catering utensils on the hinged-open upper part. By using abutment means as provided by the invention, in the open position the container constitutes a stable tray device by means of which e.g. food may be served in an easy and safe manner. Consequently, an additional serving tray basically is obsolete. This helps to save room and weight. This is particularly advantageous onboard aircrafts and furthermore helps to save costs.

Consequently, in addition to the functionality of a conventional container, the container according to the invention has the functionality of a tray. In its closed position the container may be used as a conventional container, while in its open position, the container may be used as a tray.

The shape, dimension and design of the plastics container according to the invention may be chosen within wide limits according to the respective requirements.

According to a preferred embodiment, the abutment means limits the pivoting of the upper part relative to the lower part to a pivoting angle of approximately 180°. Basically, the abutment means may be embodied in an arbitrary manner. In so far, a preferred embodiment provides that the container, in particular with respect to the hinge and/or the shape of the lower part and the upper part, is arranged such that in the open position sidewalls of the upper part and the lower part facing each other, at least sectionally abut against each other thereby forming the abutment means. In this embodiment, the abutment means are formed by side walls of the upper part and the lower part abutting against each other in the open position of the container. Consequently, separate abutment means are not required.

The hinge connecting the lower part with the other part may be embodied in an arbitrary manner. According to a preferred embodiment, which is simple and may be manufactured easily by injection-moulding, provides that the upper part is connected with the lower part by a hinge strip wherein on the hinge strip between the upper part and the lower part a hinge line is formed, said upper part being pivotable relative to the lower part with the hinge line forming a pivoting axis, while in the open position of the container the sidewall of the lower part and the sidewall of the upper part in the area of the hinge strip are spaced relative to each other by the width of the hinge strip. In this embodiment, the hinge strip, the upper part and the lower part may be embodied as separate element. It is particular preferred, that the hinge strip is integral with the upper part and the lower part. In this embodiment, the container may be formed integrally by injection-moulding.

According to a further preferred embodiment of the invention, the container, in particular with respect to the hinge and/or the shape of the upper part and the lower part is arranged such that in the open position of the container the free rim of the lower part and the free rim of the upper part are located substantially within the same plane.

Plastics container according to the invention may be manufactured from an arbitrary suitable plastics material. In so far, it is preferred that the container at least partially is manufactured from polyethylene or polystyrene.

In order to render the manufacturing process of the container according to the invention particularly simple and cost-effective, according to a preferred embodiment the container is manufactured by injection-moulding or thermoforming. A mould for manufacturing the plastics container according to the invention is claimed in claim 8. The mould according to the invention is characterized in that the mould is arranged and/or embodied such that the container is moulded or formed in a pivoting position of the upper part relative to the lower part in which the bottom surface of the lower part, which in the open position of the container is substantially aligned with the upper surface of the upper part, constitutes an obtuse angle with the upper surface of the upper part. In this embodiment, manufacturing the hinge is particularly simple.

As far as the terms "bottom surface" and "top surface" are used, these terms refer to the orientation of the respective surfaces in the closed position of the container. According to the invention the upper part and the lower part may be embodied in an identical manner. However, the upper part and the lower part may be embodied in a different manner, in particular with respect to their shape. In so far, the lower part may constitute a base, while the upper part may constitute a lid of the container.

The invention will now be explained in greater detail with reference to the enlcosed drawing in which an embodiment of a container according to the invention is illustrated. All features claimed in the claims, described in the specification and shown in the drawings constitute the subject matter of the invention, either taken alone or in arbitrary combination with each other, independently from their combination in the claims and the reference all references of the claims as well as independently from their description and illustration in the drawing.

In the drawings:
- Fig. 1: illustrates an embodiment of a container according to the invention in the closed position,
- Fig. 2: illustrates the container according to figure 1 in the open position,
- Fig. 3: shows a schematic view for illustrating the geometrical proportions with respect to the hinge and the sidewalls of the upper part and the lower part in the open position,
- Fig. 4: shows a side view of the container according to figure 1 in the open position,
- Fig. 5: shows a side view of the container according to figure 1 in the closed position and
- Fig. 6: shows a pivoting position of the upper part relative to the lower part in which pivoting position the container is injection-moulded.

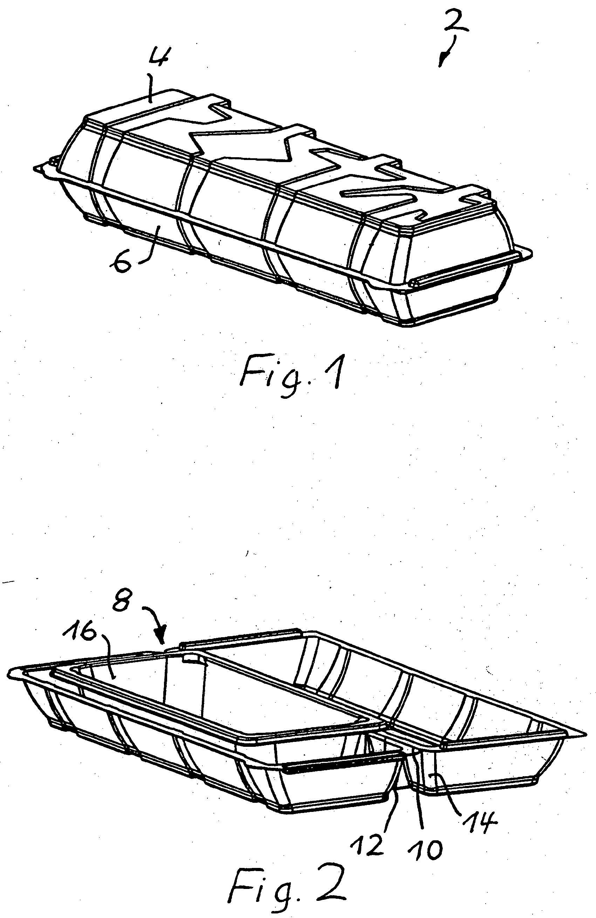

Fig. 1 shows a plastics container 2 according to the invention which may be used in particular for catering purposes onboard aircrafts. The plastics container 2 which in the following will be referenced simply as container 2, may be manufactured from polyethylene or polystyrene by injection-moulding or thermoforming.

The container 2 includes an upper part 4 and a lower part 6. In the present embodiment, the upper part 4 as well as the lower part 6 has a bowl-like shape. Fig. 1 illustrates the container 2 in its closed position in which the upper part 4 is hinged onto the lower part 6 such that the upper part 4 and the lower part 6 constitute a closed container for receiving e.g. food, cutlery or other catering utensils.

Fig. 2 shows the container in its open position in which the upper part is hinged-open. For hinging the upper part 4 between the open position and the closed position relative to the lower part 6, a hinge 8 is provided, said hinge 8 connecting the upper part 4 with the lower part 6. In the present embodiment, the hinge is embodied as a hinge strip which is integral with the upper part 4 and the lower part 6. Between the upper part 4 and the lower part 6 a hinge line 10 is constituted, said hinge line forming a pivoting axis about which the upper part 4 may be pivoted relative to the lower part 6. As illustrated in fig. 2., in the open position of the container 2 a sidewall 12 of the lower part 6 and the sidewalls 14 of the upper part 4 in the area of the hinge strip are spaced to each other. The hinge line 10 may be formed by weakening the material of the hinge strip along a hinge line.

As shown in figure 2, in the open position, in which the upper part 4 and the lower part 6 are placed side by side, the container constitutes a tray, for receiving e.g. a dish 16.

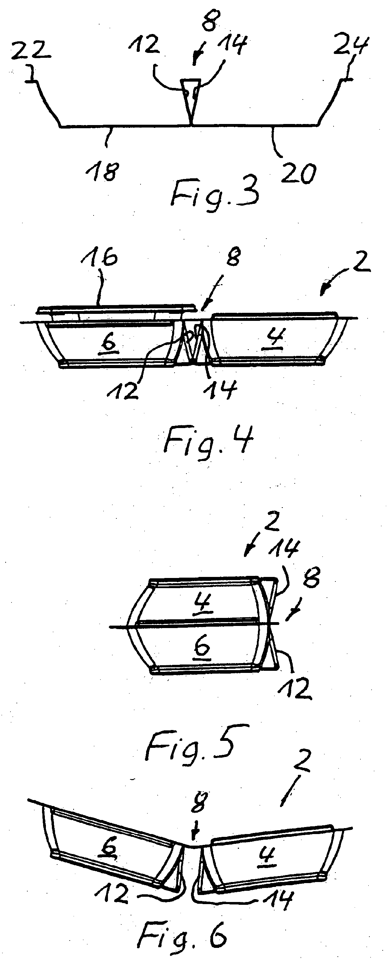

Fig. 3 is a schematical view for illustrating the geometrical proportions with respect to the hinge 8 and the sidewalls 12, 14 of the lower part 6 and the upper part 4 in the open position of the container. As can be taken from figure 3, in this embodiment with respect to the hinge 8 and the shape of the lower part 6 and the upper part 4, in particular with respect to the shape of the sidewalls 12, 14 the container is embodied such that in the open position the sidewalls 12, 14 of the upper part 4 and the lower part 6 at least sectionally are in contact with each other thereby constituting the abutment means. In the illustrated embodiment, in the open position the sidewalls 12, 14 are in contact with each other in the area of the aligned surfaces 18, 20 (bottom surface 18 of the lower part 6 and upper surface 20 of the upper part 4) while the distance between the sidewalls 12, 14 increases towards the hinge 8.

By the abutment means provided by the invention, the pivoting of upper part 4 relative to the lower part 6 is restricted to a pivoting angle of approximately 180° such, that in the open position the surfaces 18, 20 of the lower part 6 and the upper part 4 are aligned with each other and are located within the same plane. Likewise, in the open position, the rim 22 of the lower part 6 and the rim 24 of the upper part 4 are substantially aligned with each other and are located substantially within the sam plane.

Fig. 4 shows a sideview of the container 2 in the open position.

Fig. 5 shows a sideview of the container 2 in the closed position.

Consequently, the container 2 according to the invention has the additional functionality of a tray so that basically the use of a separate serving tray may be obsolete.

In order to enable the hinge 8 to be manufactured integrally with the upper part 4 and the lower part 6 by injection-moulding or thermoforming, an injection-mould for manufacturing the container according to the invention by injection-moulding or thermoforming is embodied in a particular manner with respect to its shape. The mould is embodied such that the container 2 is moulded or thermoformed in the pivoting position of the upper part 4 relative to the lower part 6, in which the bottom surface 18 of the lower part 6, which in the open position of the container (see figure 2) is substantially aligned with the upper surface 20 of the upper part, constitutes an obtuse angle with the upper surface 20 of the upper part 4. Fig. 6 illustrates a corresponding position. The subject matter of the invention includes an injection-moulding or thermoforming process for manufacturing a plastics container 2 according to the invention, wherein the container 2 is injection-moulded or thermoformed in a pivoting position of the upper part 4 relative to the lower part 6 in which the bottom surface 18 of the lower part 6 which in the open position of the container 2 is substantially aligned with the upper surface 20 of the upper part 4, constitutes an obtuse angle with the upper surface 20 of the upper part 4.

## Claims

1. Plastics container (2), in particular for catering purposes onboard aircrafts,
including a lower part (6) and an upper part (4), said upper part (4) being connected with the lower part (6) by means of a hinge (8)and said upper part being pivotable relative to the lower part (4) between a closed position, in which the upper part (4) is hinged onto the lower part (6), and an open position,
said upper part (4) comprising an upper portion and a sidewall (12) and said lower part (6) comprising a lower portion and a sidewall (14),
wherein abutment means (4) are provided for limiting the pivoting of the upper part (4) relative to the lower part (6) such that in the open position of the container (2) the bottom surface (18) of the lower part (6) and the upper surface (20) of the upper part (4) are substantially aligned with each other, thereby defining aligned surfaces (18, 20)
**characterized in**
**that** in the open position of the container (2) the sidewalls (12, 14) are in contact with each other in the area of the aligned surfaces (18, 20) with the distance between the sidewalls (12, 14) increasing towards the hinge (8).

2. Plastics container as claimed in claim 1, **characterized in that** the abutment means are arranged and/or embodied such that the pivoting of the upper part (4) relative to the lower part (6) is limited to a pivoting angle of approximately 180°.

3. Plastics container as claimed in claim 1 or 2, **characterized in that** the container (2), in particular with respect to the hinge (8) and/or the shape of the lower part (6) and the upper part (4) is embodied such that in the open position sidewalls (12, 14) of the upper part (4) and the lower part (6), at least sectionally are in contact with each other thereby constituting the abutment means.

4. Plastics container as claimed in any of the preceding claims, **characterized in that** the upper part (4) is connected with the lower part (6) by means of a hinge strip, wherein a hinge line (10) is formed on the hinge strip between the upper part (4) and the lower part (6), said hinge line constituting a pivoting axis, about which the upper part (4) may be pivoted relative to the lower part (6) and wherein in the open position of the container (2) a sidewall (12) of the lower part (6) and a sidewall (14) of the upper part (4) in the area of the hinge strip are spaced to each other by the width of the hinge strip.

5. Plastics container as claimed in any of the preceding claims, **characterized in that** the container (2), in particular with respect to the hinge (8) and/or the shape of the upper part (4) and the lower part (6) is embodied such that in the open position of the container (2) the free rim (22) of the lower part (6) and the free rim (24) of the upper part (4) are located substantially within the same plane.

6. Plastics container as claimed in any of the preceding claims, **characterized in that** the container (2) at least partially is manufactured from polyethylene or polystyrene.

7. Plastics container as claimed in any of the preceding claims, **characterized in that** the container (2) is manufactured by injection-moulding.

8. Mould for manufacturing a plastics container as claimed in any of the preceding claims 1 to 7 by injection-moulding or thermoforming, **characterized in**
**that** the mould is embodied such that the container (2) is moulded or formed in a pivoting position of the upper part (4) relative to the lower part (6), in which the bottom surface (18) of the lower part (6) which in the open position of the container is substantially aligned with the upper surface (20) of the upper part (4), constitutes an obtuse angle with the upper surface (20) of the upper part (4).

## Patentansprüche

1. Kunststoffbehälter (2) insbesondere für Cateringzwecke, an Board von Flugzeugen,
mit einem Unterteil (6) und
mit einem Oberteil (4) das mit dem Unterteil (6) über ein Scharnier (8) verbunden und zwischen einer Schließposition, in der das Oberteil (4) auf das Unterteil (6) geklappt ist, und einer Offenposition verschwenkbar ist,
wobei das Oberteil (4) einen oberen Bereich und eine Seitenwand (12) aufweist und das Unterteil (6) einen unteren Bereich und eine Seitenwand (14) aufweist, mit Anschlagmitteln zum Begrenzen des Verschwenkens des Oberteils (4) relativ zu dem Unterteil (6), derart, das in der Offenposition des Behälters (2) die Unterseite (18) des Unterteils (6) und die Oberseite (26) des Oberteils (4) im wesentlichen miteinander fluchten und dadurch ausgerichtete Oberflächen (18, 20) definieren, **dadurch gekennzeichnet, dass** in der Offenposition des Behälters (2) die Seitenwände (12, 14) in Kontakt jeweils miteinander sind im Bereich der ausgerichteten Oberflächen (18, 20), wobei mit dem Abstand zwischen den Seitenwänden diese sich in Richtung des Scharniers (8) vergrößern.

2. Kunststoffbehälter nach Anspruch 1, **dadurch gekennzeichnet, dass** die Anschlagmittel derart angeordnet und/oder ausgeführt sind, dass das Verschwenken des Oberteils (4) relativ zu dem Unterteil (6) auf einen Schwenkwinkel von etwa 180 Grad begrenzt ist.

3. Kunststoffbehälter nach Anspruch 1 oder 2, **dadurch gekennzeichnet, dass** der Behälter (2), insbesondere hinsichtlich des Scharnieres (8) und/oder der Form des Unterteils (6) und des Oberteils (4), derart ausgestaltet ist, dass in der Offenposition Seitenwandungen (12, 14) des Oberteils (4) und des Unterteils (6) wenigstens abschnittsweise miteinander in Kontakt sind und so die Anschlagmittel bilden.

4. Kunststoffbehälter nach einem der vorhergehenden Ansprüche, **dadurch gekennzeichnet, dass** das Oberteil (4) mit dem Unterteil (6) über einen Scharnierstreifen verbunden ist, wobei in dem Scharnierstreifen zwischen dem Oberteil (4) und dem Unterteil (6) eine Scharnierlinie (10) gebildet ist, um die das Oberteil (4) relativ zu dem Unterteil (6) verschwenkbar ist und wobei in der Offenposition des Behälters (2) eine Seitenwandung (12) des Unterteils (6) und eine Seitenwandung (14) des Oberteils (4) im Bereich des Scharnierstreifens um die Breite des Scharnierstreifens zueinander beabstandet sind.

5. Kunststoffbehälter nach einem der vorhergehenden Ansprüche, **dadurch gekennzeichnet, dass** der Behälter (2), insbesondere hinsichtlich des Scharnieres (8) und/oder der Form des Oberteils (4) und des Unterteils (6), derart ausgebildet ist, dass in der Offenposition des Behälters (2) der freie Rand (22) des Unterteils (6) und der freie Rand (24) des Oberteils (4) im wesentlichen in der gleichen Ebene liegen.

6. Kunststoffbehälter nach einem der vorhergehenden Ansprüche, **dadurch gekennzeichnet, dass** der Behälter (2) wenigstens teilweise aus Polyethylen oder Polystyren besteht.

7. Kunststoffbehälter nach einem der vorhergehenden Ansprüche, **dadurch gekennzeichnet, dass** der Behälter (2) durch Spritzgießen hergestellt ist.

8. Spritzgussform für die Herstellung eines Kunststoffbehälters nach einem der Ansprüche 1-7 im Spritzgussverfahren oder Thermoformen, **dadurch gekennzeichnet, dass** die Form derart ausgebildet ist, dass der Behälter (2) in einer Schwenkposition des Oberteils (4) relativ zu dem Unterteil (6) spritzgegossen oder geformt wird, in der die in der Offenposition des Behälters (2) mit der Oberseite des Oberteils (4) im wesentlichen fluchtende Unterseite des Unterteils (6) mit der Oberseite des Oberteils (4) einen stumpfen Winkel bildet.

## Revendications

1. Récipient en plastique (2), en particulier à des fins de restauration à bord des avions,
comprenant une partie inférieure (6) et une partie supérieure (4), ladite partie supérieure (4) étant raccordée à la partie inférieure (6) au moyen d'une charnière (8) et ladite partie supérieure pouvant pivoter par rapport à la partie inférieure (4) entre une position fermée dans laquelle la partie supérieure (4) est articlée sur la partie inférieure (6), et une position ouverte,
ladite partie supérieure (4) comprenant une portion supérieure et une paroi latérale (12), et ladite partie inférieure (6) comprenant une portion inférieure et une paroi latérale (14) ;
dans lequel des moyens de butée (4) sont prévus pour limiter le pivotement de la partie supérieure (4) par rapport à la partie inférieure (6), de sorte que dans la position ouverte du récipient (2), la surface inférieure (18) de la partie inférieure (6) et la surface supérieure (20) de la partie supérieure (4) sont sensiblement alignées entre elles, définissant ainsi des surfaces alignées (18, 20),
**caractérisé en ce que** :
dans la position ouverte du récipient (2), les parois latérales (12, 14) sont en contact entre elles dans la zone des surfaces alignées (18, 20) avec la distance entre les parois latérales (12, 14) qui augmente vers la charnière (8).

2. Récipient en plastique selon la revendication 1, **caractérisé en ce que** les moyens de butée sont agencés et/ou mis en oeuvre de sorte que le pivotement de la partie supérieure (4) par rapport à la partie inférieure (6) est limité à un angle de pivotement d'approximativement de 180°.

3. Récipient en plastique selon la revendication 1 ou 2, **caractérisé en ce que** le récipient (2), en particulier par rapport à la charnière (8) et/ou à la forme de la partie inférieure (6) et de la partie supérieure (4), est mis en oeuvre de sorte que dans la position ouverte, les parois latérales (12, 14) de la partie supérieure (4) et de la partie inférieure (6), sont au moins en contact, de manière sectionnelle entre elles, constituant ainsi les moyens de butée.

4. Récipient en plastique selon l'une quelconque des revendications précédentes, **caractérisé en ce que** la partie supérieure (4) est raccordée à la partie inférieure (6) au moyen d'une bande de charnière, dans lequel une ligne de charnière (10) est formée sur la bande de charnière entre la partie supérieure (4) et la partie inférieure (6), ladite ligne de charnière constituant un axe de pivotement, autour duquel la partie supérieure (4) peut être pivotée par rapport la partie inférieure (6) et dans lequel, dans la position ouverte du récipient (2), une paroi latérale (12) de la partie inférieure (6) et une paroi latérale (14) de la partie supérieure (4) dans la zone de la bande de charnière sont espacées l'une de l'autre par la largeur de la bande de charnière.

5. Récipient en plastique selon l'une quelconque des revendications précédentes, **caractérisé en ce que** le récipient (2), en particulier par rapport à la charnière (8) et/ou la forme de la partie supérieure (4) et de la partie inférieure (6), est mis en oeuvre de sorte que dans la position ouverte du récipient (2), le rebord libre (22) de la partie inférieure (6) et le rebord libre (24) de la partie supérieure (4) sont positionnés sensiblement dans le même plan.

6. Récipient en plastique selon l'une quelconque des revendications précédentes, **caractérisé en ce que** le récipient (2) est au moins partiellement fabriqué à partir de polyéthylène ou de polystyrène.

7. Récipient en plastique selon l'une quelconque des revendications précédentes, **caractérisé en ce que** le récipient (2) est fabriqué par moulage par injection.

8. Moule pour fabriquer un récipient en plastique selon l'une quelconque des revendications 1 à 7, par moulage par injection ou thermoformage, **caractérisé en ce que** le moule est mis en oeuvre de sorte que le récipient (2) est moulé ou formé dans une position pivotante de la partie supérieure (4) par rapport à la partie inférieure (6), dans lequel la surface inférieure (18) de la partie inférieure (6) qui, dans la position ouverte du récipient, est sensiblement alignée avec la surface supérieure (20) de la partie supérieure (4), constitue un angle obtus avec la surface supérieure (20) de la partie supérieure (4).
